(19) Europäisches Patentamt / European Patent Office / Office européen des brevets

(11) **EP 4 046 934 A1**

(12) **EUROPEAN PATENT APPLICATION**
published in accordance with Art. 153(4) EPC

(43) Date of publication:
**24.08.2022  Bulletin 2022/34**

(21) Application number: **20889120.0**

(22) Date of filing: **16.11.2020**

(51) International Patent Classification (IPC):
**B65D 65/40** (2006.01)     **B65D 81/26** (2006.01)

(52) Cooperative Patent Classification (CPC):
**B65D 65/40; B65D 81/26**

(86) International application number:
**PCT/JP2020/042676**

(87) International publication number:
**WO 2021/100672 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **19.11.2019   JP 2019208579**

(71) Applicant: **TOPPAN INC.**
**Tokyo 110-0016 (JP)**

(72) Inventors:
• **NAGAI, Aki**
  **Tokyo 110-0016 (JP)**
• **TANAKA, Ryo**
  **Tokyo 110-0016 (JP)**
• **FUKUTAKE, Hitomi**
  **Tokyo 110-0016 (JP)**
• **WAKABAYASHI, Hiroyuki**
  **Tokyo 110-0016 (JP)**

(74) Representative: **TBK**
**Bavariaring 4-6**
**80336 München (DE)**

(54) **METHOD FOR MANUFACTURING PACKAGING BODY, FILM FOR PACKAGING MATERIAL, AND LAMINATED FILM AND PACKAGING MATERIAL COMPRISING THE SAME**

(57)     A method for manufacturing a packaging body according to the present disclosure includes the steps of: (A) preparing a packaging material that includes an innermost layer containing a resin composition containing a polypropylene resin and a filler dispersed in the resin composition, a ratio Y/X of an average particle diameter Y $\mu$m of the filler to a thickness X $\mu$m of the innermost layer being 0.02 to 3.5; (B) producing a packaging body that has the packaging material and an oil-in-water dispersion-type content hermetically housed by the packaging material; and (C) subjecting the packaging body to a heating treatment so as to absorb oil contained in the content into the innermost layer.

Fig.2

EP 4 046 934 A1

## Description

## Technical Field

The present disclosure relates to a method for manufacturing a packaging body, a film for a packaging material, and a laminated film and a packaging material including the same.

## Background Art

Conventionally, packaging materials corresponding to each content of lots of products such as foods, beverages, pharmaceutical products, and chemical products have been developed. In particular, as packaging materials for contents such as liquids, semisolids, or gel-like substances, plastic materials superior in water resistance, oil resistance, gas barrier properties, lightweight properties, flexibility, designability, and the like are used.

As packaging materials for contents such as liquids, semisolids, or gel-like substances, for example, packaging materials having the following configurations have been proposed for the purpose of providing higher functions.

- Plastic laminates obtained by laminating a plurality of types of plastic substrates
- Composite laminates of paper, a metal foil, an inorganic material, or the like with a plastic substrate
- Composite bodies obtained by treating a plastic substrate with a functional composition

As one of the above high functions, for example, a function of suppressing adhesion of a content to an inner surface of a packaging material, that is, the remaining of a content has been required. More specifically, for lid materials of containers of yogurt, jelly, syrup, etc.; retort-packed food packaging materials of watery cooked rice, soup, curry, pasta sauce, etc.; film materials for storage containers of liquids, semisolids, gel-like substances, etc. of chemical products, pharmaceutical products, etc.; and the like, it is required to have superior repellency that a content is less likely to adhere to inner surfaces of those packaging materials and easily slip down. This is because it is necessary to suppress that the content adheres to the inner surface so that the whole content cannot be used up to cause wastefulness, adhesion of the content causes contamination, and it takes a lot of trouble with a discharge operation of the content.

To cope with these requirements, for example, Patent Literature 1 has proposed a packaging container for housing a cooked food, the packaging container having a resin inner surface and having an oil film formed on the inner surface, the oil film made of a high-viscosity oily liquid satisfying a predetermined condition. Furthermore, Patent Literature 2 has proposed a packaging sheet including a heat seal layer which includes polyolefin-based particles having an average particle diameter D50 of 10 to 50 $\mu$m and a melting point of 100 to 180°C and has a surface roughness Ra of 1.00 to 7.00 $\mu$m.

## Citation List

## Patent Literature

Patent Literature 1: Japanese Unexamined Patent Publication No. 2019-18878
Patent Literature 2: International Publication WO 2018/003978

## Summary of Invention

## Technical Problem

Meanwhile, a packaging body housing curry, a pasta sauce, or the like by a packaging material is subjected, for example, to a retort treatment under a temperature condition of about 120°C. In the invention described in Patent Literature 1, it is assumed that an oil film is formed by spraying a high-viscosity oily liquid (see paragraph [0032] of Patent Literature 1). In this oil film, durability with respect to a heating treatment such as a retort treatment is insufficient. Furthermore, it is conceivable to need selection of the type of a high-viscosity oily liquid to be used according to a content and to need separate formulations. On the other hand, in the packaging sheet described in Patent Literature 2, the slip-down property of an oil-in-water dispersion-type content (for example, curry) is insufficient. This is speculated to be caused by the surface of the heat seal layer being relatively rough (surface roughness Ra: 1.00 to 7.00 $\mu$m).

The present disclosure provides a method for manufacturing a packaging body with superior slip-down property of an oil-in-water dispersion-type content. Furthermore, the present disclosure provides a film for a packaging material, and a laminated film and a packaging material including the same. Note that, in the present disclosure, the oil-in-water dispersion-type content means a content which contains water and lipid and in which the content amount of water is larger than the content amount of lipid. The "lipid" is a concept inclusive of oil that is in a liquid state at 20°C (normal temperature) and fat that is a solid at 20°C. Hereinafter, the above-described oil contained in the oil-in-water dispersion-type content and the above-described fat, which is liquefied by a heating treatment to which the packaging body according to the present disclosure is subjected, are collectively referred to as "oil" or "oil content".

**Solution to Problem**

An aspect of the present disclosure provides a method for manufacturing a packaging body. This manufacturing method includes the following steps:

(A) preparing a packaging material that includes an innermost layer containing a resin composition containing a polypropylene resin and a filler dispersed in the resin composition, a ratio Y/X of an average particle diameter Y $\mu$m of the filler to a thickness X $\mu$m of the innermost layer being 0.02 to 3.5;
(B) producing a packaging body that has the packaging material and an oil-in-water dispersion-type content hermetically housed by the packaging material; and
(C) subjecting the packaging body to a heating treatment so as to absorb oil contained in the content into the innermost layer.

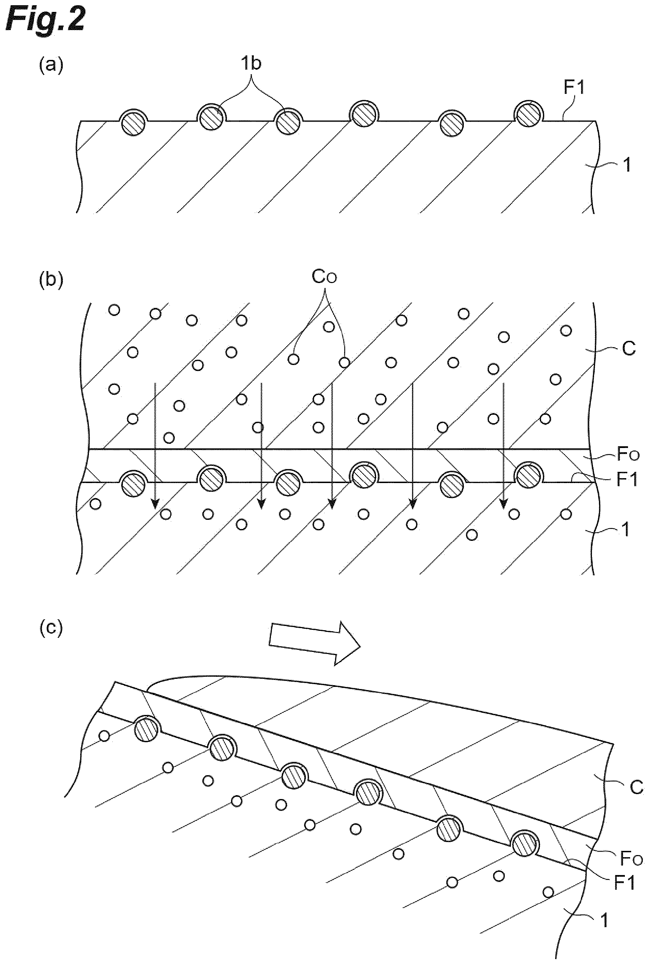

When the ratio Y/X of the average particle diameter Y $\mu$m of the filler to the thickness X $\mu$m of the innermost layer is 0.02 to 3.5, the innermost surface of the packaging material has appropriate irregularities (for example, arithmetic mean roughness Sa: 0.3 $\mu$m or more and less than 1.0 $\mu$m). Furthermore, in the step (C), when the innermost layer absorbs oil or swells by absorbing oil, the lipophilicity of the innermost surface is enhanced, and thus an oil film derived from the content is easily formed between the innermost surface and the content. By the synergistic effect between irregularities of the innermost surface and improvement in lipophilicity attributable to oil absorption, the above-described oil film is stably formed between the innermost surface and the content (see FIG. 2(b)). When the oil film is interposed between the innermost surface and the content, the content is suppressed from being in direct contact with the innermost surface, and superior slip-down property of the content containing water content is obtained. That is, an oil film derived from an oil-in-water dispersion-type content contributes to exhibition of superior slip-down property. Note that, the polypropylene resin usually includes a crystalline part and an amorphous part, and the amorphous part has higher oil absorptiveness than the crystalline part. Furthermore, the polypropylene resin has thermal adhesiveness. The innermost layer containing the polypropylene resin may act as a sealant film.

An aspect of the present disclosure provides a film for a packaging material. This film for a packaging material includes a first resin layer that contains a resin composition containing a polypropylene resin and a filler dispersed in the resin composition, in which a ratio Y/X of an average particle diameter Y $\mu$m of the filler to a thickness X $\mu$m of the first resin layer is 0.02 to 3.5. This film for a packaging material is suitably applied to the above-described method for manufacturing a packaging body. The polypropylene resin has thermal adhesiveness. The film for a packaging material including the first resin layer containing a polypropylene resin may be used as a sealant film.

An arithmetic mean roughness Sa of a first surface of the first resin layer (the innermost surface of the packaging material film) is, for example, 0.3 $\mu$m or more and less than 1.0 $\mu$m from the viewpoint of stable oil film formation and superior slip-down property of the content. From the same viewpoint, a reduced peak volume Vmp of the first surface of the first resin layer (the innermost surface of the packaging material film) is, for example, 0.08 to 0.3 $\mu m^3/\mu m^2$.

The packaging material film may have a single-layer structure including only the first resin layer, or may have a multi-layer structure including the first resin layer and a second resin layer. The second resin layer is provided, for example, on a second surface (a surface opposite to the first surface) of the first resin layer.

The first resin layer may further contain at least one additive selected from the group consisting of the following resin materials (i) to (vii) from the viewpoint of exhibiting even more superior slip-down property. The amorphous part (rubber component) contained in these resin materials has a property of absorbing oil and promotes stable and uniform oil film formation in the step (C) and the subsequent step, and thereby the slip-down property of the content can be even more improved.

(i) Block copolymer of polypropylene and polyethylene
(ii) Block copolymer of polyethylene and ethylene-butylene
(iii) Block copolymer of polyethylene and ethylene-octene
(iv) Ethylene-based elastomer
(v) Propylene-based elastomer
(vi) Butene-based elastomer

(vii) Reactor TPO

The first resin layer preferably contains at least (v) the propylene-based elastomer of the above-described additives, from the viewpoint of compatibility with the polypropylene resin contained in the first resin layer. At least one of the softening point and the melting point of the additive is preferably 130°C or lower from the viewpoint of exhibiting even more superior slip-down property after the heating treatment. Note that, the softening point of the additive may be a value that is measured by using a thermal mechanical analyzer (TMA), or may be a catalog value of a manufacturer. The melting point of the additive material may be a value that is measured by using a differential scanning calorimeter (DSC), or may be a catalog value of a manufacturer.

The present disclosure provides a laminated film including the above-described film for a packaging material and a packaging material made of this laminated film. The laminated film according to the present disclosure includes a substrate and the above-described film for a packaging material provided on the substrate, and the first resin layer is disposed on at least one outermost surface. The packaging material according to the present disclosure is suitably used in a packaging body in which an oil-in-water dispersion-type content is hermetically housed and which is subjected to a thermal treatment.

**Advantageous Effects of Invention**

According to the present disclosure, there is provided a method for manufacturing a packaging body with superior slip-down property of an oil-in-water dispersion-type content. Furthermore, according to the present disclosure, there are provided a film for a packaging material, and a laminated film and a packaging material including the same.

**Brief Description of Drawings**

FIG. 1 is a cross-sectional view schematically illustrating an embodiment of a packaging material according to the present disclosure.
FIG. 2(a) to FIG. 2(c) are schematic diagrams describing a mechanism of causing a first resin layer to exhibit slip-down property with respect to an oil-in-water dispersion-type content.
FIG. 3 is a schematic diagram illustrating a Wenzel model.
FIG. 4 is a cross-sectional view schematically illustrating another embodiment of the packaging material according to the present disclosure.
FIG. 5(a) to FIG. 5(e) are schematic diagrams describing a method of evaluating slip-down property of a packaging material inner surface.

**Description of Embodiments**

Hereinafter, embodiments of the present disclosure will be specifically described with reference to the drawings. Note that, in the drawings, the same or corresponding parts are designated by the same reference signs, and redundant description will be omitted. Furthermore, the dimensional ratios in the drawings are not limited to as ratios illustrated in the drawings.

<Packaging material>

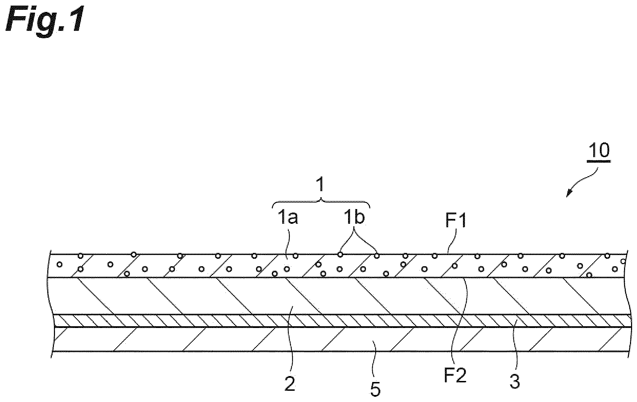

FIG. 1 is a cross-sectional view schematically illustrating an embodiment of a packaging material according to the present embodiment. A packaging material 10 illustrated in FIG. 1 includes a first resin layer 1 containing a polypropylene resin as a base material, a second resin layer 2, an adhesive layer 3, and a substrate 5. The first resin layer 1 is disposed on an outermost surface of the packaging material 10, and when a packaging body (for example, a retort pouch) is produced by using the packaging material 10, a surface F1 (first surface) of the first resin layer 1 is an innermost surface of the packaging body. Note that, in the present embodiment, a film for a packaging material is configured by the first resin layer 1 and the second resin layer 2. The second resin layer 2 is provided on a surface F2 (second surface) of the first resin layer 1 opposite to the surface F1.

The packaging material 10 is used for housing an oil-in-water dispersion-type content. The lipid content percentage of the oil-in-water dispersion-type content is, for example, 0.1% by mass or more and less than 50% by mass, and may be 0.5 to 40% by mass or 1 to 20% by mass. The oil-in-water dispersion-type content in the present embodiment includes a (water-rich) composition in which the content amount of water is larger than the content amount of oil, and oil dispersed in the composition. Specific examples of the oil-in-water dispersion type include curry, hashed beef, a pasta sauce (for example, a meat sauce), and pet food. Note that, the content percentage of lipid contained in curry is, for example, about 0.2 to 15% by mass, and the amount of water content contained in curry is, for example, about 70 to 90% by mass.

A mechanism of causing the first resin layer 1 to exhibit slip-down property with respect to an oil-in-water dispersion-type content will be described with reference to FIG. 2(a) to FIG. 2(c). As illustrated in FIG. 2(a), the surface F1 of the first resin layer 1 has irregularities attributable to a filler 1b. Furthermore, the polypropylene resin that is a main component of the first resin layer 1 has a property of swelling by absorbing oil under temperature conditions of a retort treatment and a boiling treatment. Therefore, when an oil-in-water dispersion-type content C is subjected to a heating treatment in a state of being in contact with the surface F1 of the first resin layer 1, as schematically illustrated by the arrows in FIG. 2(b), some of oil contents $C_O$ contained in the content C are absorbed into the first resin layer 1. Thereby, the lipophilicity of the surface F1 is improved. By the synergistic effect between irregularities of the surface F1 and improvement in lipophilicity attributable to oil absorption, an oil film $F_O$ is stably formed between the surface F1 and the content C. When the oil film $F_O$ is interposed between the surface F1 and the content C, the content C is suppressed from being in direct contact with the surface F1, and the content C easily slips due to the oil film $F_O$ as the interface. Thus, as illustrated in FIG. 2(c), the content C slips down from the surface F1 simply by inclining the surface F1.

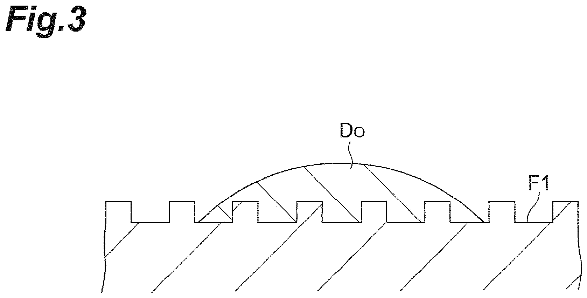

FIG. 3 is a cross-sectional view illustrating a Wenzel model to be applied in a case where the roughness of the surface F1 is relatively small. In this model, an oil drop $D_O$ dripped on the surface F1 gets into recessed portions of the surface F1 to wet the entire surface F1. According to studies of the present inventors, the mechanism of causing the oil film $F_O$ to be easily formed on the surface F1 can be described based on the Wenzel model. On the other hand, in a case where roughness of the surface F1 is relatively large, it is conceivable that the height of irregularities is likely to be higher than the height of the oil film. According to studies of the present inventors, when the surface roughness of the surface F1 is too large, the content is likely to be caught with irregularities to inhibit the content from slipping down (see Comparative Examples 2 and 3).

Hereinafter, the first resin layer 1, the second resin layer 2, the substrate 5, and the adhesive layer 3 that constitute the packaging material 10 will be described.

(First resin layer)

The first resin layer 1 is a layer exhibiting the slip-down property of the oil-in-water dispersion-type content by subjecting the layer to a heating treatment (for example, a retort treatment and a boiling treatment) in a state of being in contact with the oil-in-water dispersion-type content. The first resin layer 1 contains a resin composition 1a containing a polypropylene resin and a filler 1b dispersed in the resin composition 1a. The content amount of the polypropylene resin in the resin composition 1a is, for example, 75% by mass or more, and may be 80% by mass or more or 90% by mass or more. The resin composition 1a may be substantially composed of a polypropylene resin.

Examples of the polypropylene resin include a homopolypropylene, a block polypropylene, a random polypropylene, and a modified polypropylene. The block polypropylene described herein is different from (C1) a block copolymer of polypropylene and polyethylene (compatibilizing agent) described below, and generally has a structure in which EPR (rubber component) and polyethylene are dispersed with respect to homopolypropylene at the polymerization step. In the case of using a combination of a block polypropylene and a random polypropylene as the polypropylene resin, the mass ratio of the block polypropylene and the random polypropylene (the block polypropylene/the random polypropylene) is preferably 20/80 to 80/20 and further preferably 40/60 to 60/40.

The modified polypropylene is obtained, for example, by graft-modifying a polypropylene with an unsaturated carboxylic acid derivative component derived from unsaturated carboxylic acid, an acid anhydride of unsaturated carboxylic acid, an ester of unsaturated carboxylic acid, or the like. Furthermore, as the polypropylene resin, modified polypropylenes such as a hydroxyl group-modified polypropylene and an acrylic-modified polypropylene can also be used. As an α olefin component that is used for obtaining a propylene-based copolymer, 1-butene, 1-pentene, 1-hexene, 1-heptene, 1-octene, 4-methyl-1-pentene, and the like can be exemplified.

The first resin layer 1 preferably further contains at least one additive selected from the group consisting of the following resin materials (i) to (vii) from the viewpoint of exhibiting even more superior slip-down property. Note that, a reactor TPO (reactor thermoplastic polyolefin) is one kind of olefin-based thermoplastic elastomers (TPOs) and is, for example, configured by a polypropylene as a base resin and a rubber component finely dispersed therein by adding a high-concentration rubber component during polymerization.

(i) Block copolymer of polypropylene and polyethylene
(ii) Block copolymer of polyethylene and ethylene-butylene
(iii) Block copolymer of polyethylene and ethylene-octene
(iv) Ethylene-based elastomer
(v) Propylene-based elastomer

(vi) Butene-based elastomer
(vii) Reactor TPO

The addition amount of the above-described resin components (i) to (vii) (the total amount in the case of adding a plurality of resin components) is, for example, 30 parts by mass or less, preferably 1 to 25 parts by mass, more preferably 2 to 20 parts by mass, and further preferably 3 to 15 parts by mass, with respect to 100 parts by mass of the polypropylene resin. The amorphous part (rubber component) contained in the resin components (i) to (vii) has a property of absorbing oil. Therefore, these resin components promote stable and uniform formation of the oil film $F_O$ (see FIG. 2(b)), and thereby the slip-down property of the content C is even more improved.

The first resin layer 1 preferably contains at least (v) the propylene-based elastomer of the above-described resin components (additives) (i) to (vii), from the viewpoint of compatibility with the polypropylene resin contained in the first resin layer 1. At least one of the softening point and the melting point of the resin component is preferably 130°C or lower and more preferably 120°C or lower, from the viewpoint of exhibiting even more superior slip-down property after the heating treatment.

Examples of the filler 1b include organic fillers such as an olefin filler and an acrylic filler, inorganic fillers such as a silica filler, and a porous filler. Examples of the olefin filler include MIPELON (registered trademark) series manufactured by Mitsui Chemicals, Inc. and CS series manufactured by SUMITOMO CHEMICAL COMPANY, LIMITED. Examples of the acrylic filler include MX series manufactured by Soken Chemical & Engineering Co., Ltd. Examples of the silica filler include SMOOTH MASTER series manufactured by Dainichiseika Color & Chemicals Mfg. Co., Ltd., SYLOPHOBIC series manufactured by FUJI SILYSIA CHEMICAL LTD., and ADMAFINE SO series manufactured by Admatechs Company Limited.

The average particle diameter (Y $\mu$m) of the filler 1b can be obtained as follows.

<Calculation by laser diffraction type particle size distribution measurement>

(1) A filler is dispersed in a dispersion medium. The dispersion medium is, for example, water or an organic solvent and is appropriately selected according to the type of the filler.
(2) The average particle diameter of the filler is calculated by using a laser diffraction type particle size distribution measuring apparatus (product name: MT3300EXII, manufactured by MicrotracBEL Corp.) according to a laser diffraction scattering method.

<Calculation by microscope observation>

In a case where the laser diffraction type particle size distribution measurement is not suitable or is difficult, the average particle diameter of the filler may be obtained by using an optical microscope such as a scanning electron microscope (SEM) or a laser microscope. Regarding an arbitrary particle in the field of view of a microscope, lengths of the maximum diameter and the minimum diameter of the particle are measured and a value obtained by dividing the sum of the lengths by 2 is regarded as the particle diameter. The particle diameters of a plurality of particles are measured and calculated, and an average thereof is regarded as the average particle diameter. The number of arbitrary particles described above is preferably 10 or more.

The average particle diameter (Y $\mu$m) of the filler 1b is, for example, 1 to 100 $\mu$m, preferably 2 to 80 $\mu$m, more preferably 3 to 50 $\mu$m, and further preferably 5 to 30 $\mu$m. When the average particle diameter of the filler 1b is in the above range, appropriate irregularities can be provided to the surface F1 of the first resin layer 1. The content amount of the filler 1b of the first resin layer 1 is, for example, 0.5 to 10 parts by mass, preferably 1 to 8 parts by mass, and more preferably 2 to 8 parts by mass, with respect to 100 parts by mass of the polypropylene resin. When the content amount of the filler 1b is in the above range, appropriate irregularities can be provided to the surface F1 of the first resin layer 1.

The thickness (X $\mu$m) of the first resin layer 1 refers to a value obtained as follows.

(1) First, the packaging material 10 is fixed to an embedding resin (acrylic resin) to prepare a structure.
(2) A sample for cross-section observation is cut off from the structure by a microtome.
(3) The cross-section of the cut sample for cross-section observation is observed by a microscope (product name: VHX-1000, manufactured by KEYENCE CORPORATION).
(4) The thicknesses in three places in which the filler 1b does not exist are measured along the thickness direction of the first resin layer 1, and an average value of these thicknesses in three places is calculated as the thickness (X $\mu$m) of the first resin layer 1.

The thickness (X $\mu$m) of the first resin layer 1 is, for example, 2 to 100 $\mu$m, preferably 4 to 70 $\mu$m, more preferably 6 to 50 $\mu$m, and further preferably 8 to 30 $\mu$m. When the thickness of the first resin layer 1 is in the above range, both of the slip-down property of the content and the heat-sealability can be achieved in a high level. The first resin layer 1 contains a polypropylene resin having thermal adhesiveness and can also act as a sealant film. The heat-sealability refers to, for example, a property that enables heat sealing under conditions of 100 to 200°C and 0.1 to 0.3 MPa for 1 to 3 seconds.

A ratio Y/X of the average particle diameter Y $\mu$m of the filler 1b to the thickness X $\mu$m of the first resin layer 1 is 0.02 to 3.5. When the ratio Y/X is in the above range, appropriate irregularities are formed on the surface F1 when the first resin layer 1 is formed. When the ratio Y/X is less than 0.02, irregularities of the surface F1 are not sufficiently formed, which causes slip-down property to become insufficient. On the other hand, when the ratio Y/X is more than 3.5, irregularities are excessively formed on the surface F1, and these irregularities may inhibit the content from slipping down. The ratio Y/X is preferably 0.05 or more, more preferably 0.1 or more, and further preferably 0.3 or more. The ratio Y/X is preferably 3.0 or less, more preferably 2.5 or less, and further preferably 1.8 or less, and may be 1.5 or less or 1.2 or less.

An arithmetic mean roughness Sa of the surface F1 of the first resin layer 1 is preferably 0.3 $\mu$m or more and less than 1.0 $\mu$m, more preferably 0.4 $\mu$m or more and less than 1.0 $\mu$m, and further preferably 0.5 $\mu$m or more, 0.98 $\mu$m or less, from the viewpoint of exhibiting superior slip-down property. The arithmetic mean roughness Sa of the surface F1 can be adjusted, for example, by the blending amount and the average particle diameter of the filler 1b, and the film formation conditions (such as a thickness and a temperature) of the first resin layer 1. Note that, a value of the "arithmetic mean roughness Sa" described herein means a measured value obtained by using a laser microscope (trade name "OLS-4000", manufactured by Olympus Corporation) under the following condition.

- Magnification of objective lens: 50 times
- Cut-off: None

The reduced peak volume Vmp of the surface F1 of the first resin layer 1 is preferably 0.08 to 0.3 $\mu$m$^3$/$\mu$m$^2$, more preferably 0.08 to 0.25 $\mu$m$^3$/$\mu$m$^2$, and further preferably 0.1 to 0.2 $\mu$m$^3$/$\mu$m$^2$, from the viewpoint of exhibiting superior slip-down property. The reduced peak volume Vmp of the surface F1 can be adjusted, for example, by the blending amount and the average particle diameter of the filler 1b, and the film formation conditions (such as a thickness and a temperature) of the first resin layer 1. Note that, a value of the "reduced peak volume Vmp" described herein means a measured value obtained by using a laser microscope (trade name "OLS-4000", manufactured by Olympus Corporation) under the following condition.

- Areal material ratio separating core part and reduced peak part: 10%

(Second resin layer)

The second resin layer 2 is a layer provided between the first resin layer 1 and the substrate 5. When the packaging material 10 further includes the second resin layer 2, the functions (such as heat-sealability, heat resistance, impact resistance, and oxygen/water vapor barrier properties) of the packaging material 10 can be improved. For example, from the viewpoint of improving heat-sealability, the second resin layer 2 preferably contains a thermoplastic resin. Specific examples of the thermoplastic resin include a polyolefin resin, an ethylene-$\alpha,\beta$ unsaturated carboxylic acid copolymer or an esterified product or ion-crosslinked product thereof, an ethylene-vinyl acetate copolymer or a saponified product thereof, polyvinyl acetate or a saponified product thereof, a polycarbonate resin, a thermoplastic polyester resin, an ABS resin, a polyacetal resin, a polyamide resin, a polyphenylene oxide resin, a polyimide resin, a polyurethane resin, a polylactic resin, a furan resin, a silicone resin, and the like. These thermoplastic resins can be used singly or in combination of two or more types thereof.

The thickness of the second resin layer 2 can be appropriately set according to applications of the packaging material 10. The thickness of the second resin layer 2 is, for example, 1 to 300 $\mu$m, preferably 2 to 200 $\mu$m, more preferably 5 to 150 $\mu$m, and further preferably 10 to 100 $\mu$m.

(Substrate)

The substrate 5 serves as a support and is not particularly limited as long as it has durability with respect to the heating treatment, and examples thereof include a resin film, a metal foil, and the like. Examples of the resin film include films containing at least one kind of polyolefins (such as polyethylene (PE) and polypropylene (PP)), acid-modified polyolefins, polyesters (such as polyethylene terephthalate (PET)), polyamide (PA), polyvinyl chloride (PVC), acetylcellulose, and a cellophane resin. This film may be a stretched film or may be an unstretched film. Examples of the metal foil include an aluminum foil, a nickel foil, and the like. The substrate 5 may be obtained by laminating a plurality of substrates each made of a different material, or may include a coating layer or a metal deposition film.

The thickness of the substrate 5 can be appropriately set according to applications of the packaging material 10. The thickness of the substrate 5 is, for example, 1 to 500 μm and may be 10 to 100 μm.

(Adhesive layer)

The adhesive layer 3 attaches a film for a packaging material (a laminate of the first resin layer 1 and the second resin layer 2) and the substrate 5 to each other. Examples of the adhesive include polyurethane resins obtained by causing a bifunctional or higher isocyanate compound to act on main agents such as polyester polyol, polyether polyol, acrylic polyol, and carbonate polyol, and the like.

In the adhesive layer 3, a carbodiimide compound, an oxazoline compound, an epoxy compound, a phosphorus compound, a silane coupling agent, or the like may be blended with the polyurethane resin described above, for the purpose of adhesion promotion. Other various additives or stabilizing agents may be blended with the polyurethane resin described above according to the performance required in the adhesive layer 3.

The thickness of the adhesive layer 3 is, for example, 1 to 10 μm and may be 3 to 7 μm, from the viewpoint of obtaining desired adhesion strength, followability, processability, and the like. Various polyols may be used singly or in combination of two or more kinds thereof. Examples of a method of pasting the substrate 5 and the film for a packaging material together include lamination with an adhesive and lamination by a thermal treatment.

(Lamination method with adhesive)

As the lamination method with an adhesive, various known lamination methods such as dry lamination, wet lamination, and nonsolvent lamination can be used. Examples of the adhesive that is used in these lamination methods include those described below.

(Lamination method by thermal treatment)

Examples of the lamination method by a thermal treatment roughly include the following methods:

(1) a method in which an adhesive resin is extruded between a liquid-repellent film, which has been formed in advance, and the substrate 5 and laminated;
(2) a method in which a resin constituting a liquid-repellent film and an adhesive resin are co-extruded and laminated with the substrate 5;
(3) a method in which the laminated substrate obtained by the method (1) or (2) is further heated and pressurized by a thermal roll so as to be bonded; and
(4) a method in which the laminated substrate obtained by the method (1) or (2) is further stored under a high-temperature atmosphere or allowed to pass through a drying and baking furnace under a high-temperature atmosphere.

Examples of the adhesive resin that is used in the lamination method by a thermal treatment include acid-modified polyolefins, and the like. Furthermore, although the substrate 5 and the liquid-repellent film are laminated by extrusion lamination in the above-described method, an acid-modified polyolefin-based coating agent (dissolved type or dispersed type) may be coated in advance on the substrate 5 without performing extrusion lamination, and then the liquid-repellent film may be laminated by a thermal treatment.

An adhesive primer (anchor coat) may be provided on the substrate 5, and as a material therefor, polyester-based, polyurethane-based, polyallylamine-based, polyethylenimine-based, polybutadiene-based materials, an ethylene-vinyl acetate copolymer, a chlorine-vinyl acetate-based material, and the like can be used. Various curing agents or additives that can be used as an adhesive may be blended, as necessary, in the adhesive primer.

<Method for manufacturing packaging body>

A method for manufacturing a packaging body according to the present embodiment includes the following steps:

(A) preparing the packaging material 10;
(B) producing a packaging body P that has the packaging material 10 and the oil-in-water dispersion-type content C hermetically housed by the packaging material 10; and
(C) subjecting the packaging body P to a heating treatment (for example, a retort treatment or a boiling treatment) so as to absorb oil contained in the content C into the first resin layer 1.

According to the manufacturing method of the present embodiment, by the synergistic effect between irregularities of the surface F1 of the first resin layer 1 and improvement in lipophilicity attributable to oil absorption, the oil film $F_O$ is stably formed between the surface F1 and the content C (see FIG. 2(b)). When the oil film is interposed between the surface F1 and the content C, the content C is suppressed from being in direct contact with the surface F1, and superior slip-down property of the content C containing water content is obtained (see FIG. 2(c)).

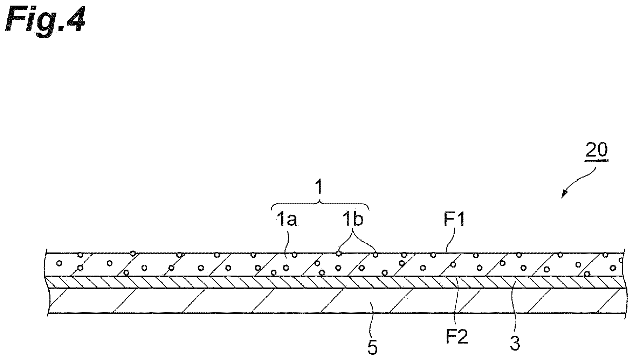

Hereinbefore, the embodiments of the present disclosure have been specifically described; however, the present invention is not limited to the above-described embodiments. For example, in the above-described embodiments, the film for a packaging material configured by the first and second resin layers 1 and 2 has been illustrated as an example, but a film for a packaging material may be configured as a single layer composed of only the first resin layer 1. A packaging material 20 illustrated in FIG. 4 includes the first resin layer 1 (film for a packaging material), the adhesive layer 3, and the substrate 5.

**Examples**

Hereinafter, the present disclosure will be more specifically described on the basis of Examples and Comparative Examples; however, the present invention is not limited to the following Examples.

The following materials were prepared.

<Polypropylene resin (A)>

- A1: Random PP resin (propylene-ethylene random copolymer, trade name "Prime Polypro F744NP", manufactured by Prime Polymer Co., Ltd.)
- A2: Block PP resin (propylene-ethylene block copolymer, trade name "Prime Polypro BC5FA", manufactured by Prime Polymer Co., Ltd.)
- A3: Block PP resin (propylene-ethylene block copolymer, trade name "Prime Polypro BC3HF", manufactured by Prime Polymer Co., Ltd.)

<Filler (B)>

- B1: Olefin filler (average particle diameter: 2 μm, trade name "CS18", manufactured by SUMITOMO CHEMICAL COMPANY, LIMITED)
- B2: Olefin filler (average particle diameter: 10 μm, trade name "MIPELON PM-1010", b-PP masterbatch, manufactured by Mitsui Chemicals, Inc.)
- B3: Olefin filler (average particle diameter: 30 μm, trade name "MIPELON XM-220", manufactured by Mitsui Chemicals, Inc.)
- B4: Olefin filler (average particle diameter: 60 μm, trade name "MIPELON XM-330", manufactured by Mitsui Chemicals, Inc.)
- B5: Silica filler (average particle diameter: 2 μm, trade name "SMOOTH MASTER S PE2000", manufactured by Dainichiseika Color & Chemicals Mfg. Co., Ltd.)
- B6: Silica filler (average particle diameter: 8 μm, trade name "SYLOPHOBIC 4004", manufactured by FUJI SILYSIA CHEMICAL LTD.)
- B7: Acrylic filler (average particle diameter: 30 μm, trade name "MX-3000", manufactured by Soken Chemical & Engineering Co., Ltd.)

The average particle diameter of the filler can be obtained by measuring each of lengths in longitudinal and traverse directions of arbitrary ten particles and averaging values obtained by dividing the sum of the lengths by 2.

<Additive (C)>

- C1: Block copolymer of polypropylene and polyethylene

- C2: Block copolymer of polyethylene and ethylene-butylene
- C3: Block copolymer of polyethylene and ethylene-octene
- C4: PE-based elastomer (trade name "TAFMER A4085S", manufactured by Mitsui Chemicals, Inc.)
- C5a: PP-based elastomer (trade name "TAFMER PN3560", manufactured by Mitsui Chemicals, Inc.)
- C5b: PP-based elastomer (trade name "TAFMER PN2060", manufactured by Mitsui Chemicals, Inc.)
- C5c: PP-based elastomer (trade name "TAFMER PN2070", manufactured by Mitsui Chemicals, Inc.)
- C5d: PP-based elastomer (trade name "TAFMER XM7070", manufactured by Mitsui Chemicals, Inc.)
- C6: PB-based elastomer (trade name "TAFMER BL4000", manufactured by Mitsui Chemicals, Inc.)
- C7: Reactor TPO (trade name "CATALLOY C200F", LyondellBasell Industries Holdings B.V.)

<Production of packaging material>

(Examples 1 to 42 and Comparative Examples 1 to 5)

A film for a packaging material (sealant film) of a two-layer structure including the first resin layer having a composition each shown in Tables 1 to 8 and the second resin layer made of A3 (block PP resin) was produced by using a co-extruder. The obtained film and a PET film (trade name "EMBLET", manufactured by UNITIKA LTD.) having a thickness of 38 $\mu$m as a substrate were dry-laminated by using a polyurethane-based adhesive (manufactured by Mitsui Chemicals, Inc.) and were aged at 50°C for 5 days to obtain a packaging material. Note that, in Examples and Comparative Examples except Comparative Example 3, film formation was performed so that the total thickness of the first resin layer and the second resin layer was 60 $\mu$m. In Comparative Example 3, film formation was performed so that the thickness of the first resin layer was 150 $\mu$m and the thickness of the second resin layer was 50 $\mu$m.

<Measurement of arithmetic mean roughness Sa>

The arithmetic mean roughness Sa of the first resin layer was measured by using a laser microscope (trade name "OLS-4000", manufactured by Olympus Corporation) under the following condition.

- Magnification of objective lens: 50 times
- Cut-off: None

<Measurement of reduced peak volume Vmp>

The reduced peak volume Vmp of the first resin layer was measured by using a laser microscope (trade name "OLS-4000", manufactured by Olympus Corporation) under the following condition.

- Areal material ratio separating core part and reduced peak part: 10%

<Slip-down property evaluation>

(Residual liquid evaluation after retort treatment)

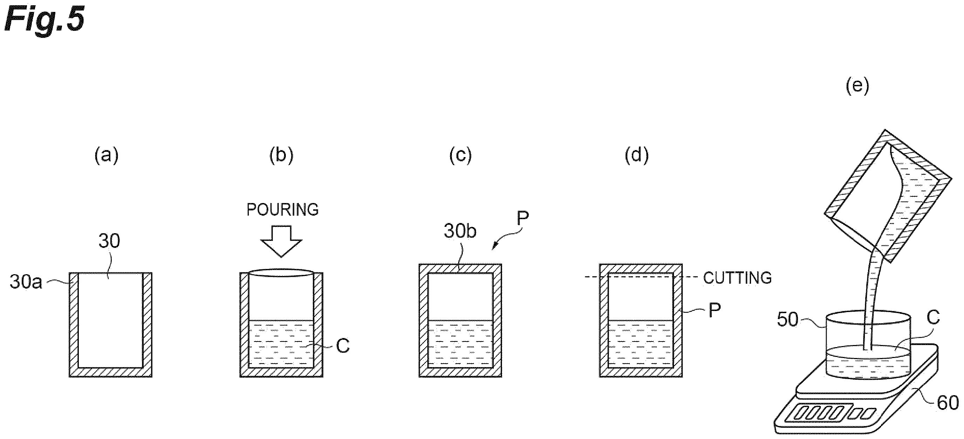

The slip-down property of the packaging materials obtained in Examples and Comparative Examples after a retort treatment was evaluated by the method illustrated in FIG. 5(a) to FIG. 5(e). First, two sheets of packaging materials 30 obtained by cutting the packaging material into a size of length 150 mm × width 138 mm were prepared. The two sheets of packaging materials 30 were superimposed such that each of the first resin layers faces inward, and three sides were sealed in this state by using a heat sealer. As illustrated in FIG. 5(a), a pouch in which a sealed portion 30a was formed on three sides and one side was opened was produced. Note that, the three sides were heat-sealed under conditions of 190°C and 0.03 MPa for 2 seconds, and the width of the sealed portion 30a was set to 10 mm. Next, 180 g of curry (trade name "Bon Curry Gold Mild", lipid amount 7.0 g/180 g, manufactured by Otsuka Foods Co., Ltd.) as the content C was poured into the pouch through the opening portion of the pouch (see FIG. 5(b)). Thereafter, the opening portion (the remaining one side) was sealed by using a heat sealer. As illustrated in FIG. 5(c), the packaging body P in which a sealed portion 30b was formed on the remaining one side, four sides were sealed, and the content C was housed was produced. Note that, the opening portion was heat-sealed under conditions of 190°C and 0.03 MPa for 2 seconds, and the width of the sealed portion 30b was set to 10 mm.

The packaging body P was put in a high-temperature, highpressure cooking and sterilizing device (manufactured by Hitachi Capital Corporation) and subjected to a retort treatment with a high-temperature water vapor. The retort treatment was performed under the following conditions.

- Pressure: 0.2 MPa
- Temperature 121°C
- Treatment time: 30 minutes

After the retort treatment, the packaging body P was subjected to a double-boiling treatment at 100°C over 5 minutes. After these heating treatments, the upper part of the packaging body P was cut to form a pour spout (see FIG. 5(d)). Next, a state where the pouch was inverted and the pour spout was inclined at 45° from the horizontal plane was maintained for 10 seconds, the content C was discharged in a container 50, and the discharge amount was weighed by a scale 60 (see FIG. 5(e)). A residual liquid amount (%) was determined from the weighed discharge amount by the following equation.

$$\text{Residual liquid amount (\%)} = \{(180 - \text{Discharge amount})/180\} \times 100$$

The measurement was performed three times, and the residual liquid evaluation was performed from an average residual liquid amount of three times measurements on the basis of the following evaluation criteria. Results of the residual liquid amount and the residual liquid evaluation are shown in Tables 1 to 8.

A: The average residual liquid amount is less than 6.5%.
B: The average residual liquid amount is 6.5% or more and less than 8.0%.
C: The average residual liquid amount is 8.0% or more and less than 10.0%.
D: The average residual liquid amount is 10.0% or more.

(Appearance evaluation after retort treatment)

In the above-described residual liquid evaluation, the discharge behavior of curry when the curry was discharged from the inside of the pouch was observed by visual inspection, and the appearance evaluation was performed on the basis of the following evaluation criteria. Results are shown in Tables 1 to 8.

A: It is observed that the curry slips down cleanly, and there is almost no adhesion of the curry to the film.

B: It is observed that the curry slips down, and there is little adhesion of the curry to the film.

C: It is observed that the curry slips down, but the curry adheres to the film.

D: It is not observed that the curry slips down.

[Table 1]

| | | Ex. 1 | Ex. 2 | Ex. 3 | Ex. 4 | Ex. 5 | Ex. 6 |
|---|---|---|---|---|---|---|---|
| Composition of first resin layer | A1 | 50 | 50 | 50 | 50 | 50 | 50 |
| | A2 | 50 | 50 | 50 | 50 | 50 | 50 |
| | B1 (Y = 2) | 1 | - | - | - | - | - |
| | B3 (Y = 30) | - | 5 | - | - | - | - |
| | B4 (Y = 60) | - | - | 5 | - | - | - |
| | B5 (Y = 2) | - | - | - | 1 | - | - |
| | B6 (Y= 8) | - | - | - | - | 5 | - |
| | B7 (Y = 30) | - | - | - | - | - | 5 |

(continued)

|  |  | Ex. 1 | Ex. 2 | Ex. 3 | Ex. 4 | Ex. 5 | Ex. 6 |
|---|---|---|---|---|---|---|---|
| Physical properties of first resin layer | Average particle diameter Y ($\mu$m) of filler | 2 | 30 | 60 | 2 | 8 | 30 |
| | Thickness X ($\mu$m) | 15 | 30 | 30 | 15 | 15 | 30 |
| | Y/X | 0.13 | 1.00 | 2.00 | 0.13 | 0.53 | 1.00 |
| | Sa ($\mu$m) | 0.23 | 3.12 | 3.89 | 0.21 | 1.34 | 3.32 |
| | Vmp ($\mu$m$^3$/$\mu$m$^2$) | 0.02 | 0.39 | 0.44 | 0.03 | 0.33 | 0.40 |
| Residual liquid amount (%) | | 8.1 | 8.0 | 7.9 | 8.3 | 8.5 | 8.4 |
| Residual liquid evaluation | | C | C | B | C | C | C |
| Appearance evaluation | | C | C | C | C | C | C |

[Table 2]

|  |  | Ex. 7 | Ex. 8 | Ex. 9 | Ex. 10 | Ex. 11 | Ex. 12 |
|---|---|---|---|---|---|---|---|
| Composition of first resin layer (parts by mass) | A1 | 50 | 50 | 50 | 50 | 50 | 50 |
| | A2 | 50 | 50 | 50 | 50 | 50 | 50 |
| | B1 (Y = 2) | 5 | - | - | - | - | - |
| | B2 (Y= 10) | - | - | - | 1 | 2 | 5 |
| | B3 (Y = 30) | - | 1 | | - | - | - |
| | B4 (Y = 60) | - | - | 1 | - | - | - |
| Physical properties of first resin layer | Average particle diameter Y ($\mu$m) of filler | 2 | 30 | 60 | 10 | 10 | 10 |
| | Thickness X ($\mu$m) | 15 | 30 | 30 | 15 | 15 | 15 |
| | Y/X | 0.13 | 1.00 | 2.00 | 0.67 | 0.67 | 0.67 |
| | Sa ($\mu$m) | 0.31 | 0.79 | 0.95 | 0.46 | 0.69 | 0.97 |
| | Vmp ($\mu$m$^3$/$\mu$m$^2$) | 0.03 | 0.33 | 0.41 | 0.12 | 0.12 | 0.14 |
| Residual liquid amount (%) | | 7.8 | 7.6 | 7.9 | 7.2 | 6.9 | 6.8 |
| Residual liquid evaluation | | B | B | B | B | B | B |
| Appearance evaluation | | C | C | C | C | B | B |

[Table 3]

|  |  | Ex. 13 | Ex. 14 | Ex. 15 | Ex. 16 | Ex. 17 | Ex. 18 |
|---|---|---|---|---|---|---|---|
| Composition of first resin layer (parts by mass) | A1 | 50 | 50 | 50 | 50 | 50 | 50 |
| | A2 | 50 | 50 | 50 | 50 | 50 | 50 |
| | B2 (Y = 10) | 5 | 5 | 5 | 5 | 5 | 5 |
| | C1 | 5 | 10 | 20 | - | - | - |
| | C2 | - | - | - | 5 | 10 | 20 |

(continued)

|  |  | Ex. 13 | Ex. 14 | Ex. 15 | Ex. 16 | Ex. 17 | Ex. 18 |
|---|---|---|---|---|---|---|---|
| Physical properties of first resin layer | Average particle diameter Y ($\mu$m) of filler | 10 | 10 | 10 | 10 | 10 | 10 |
|  | Thickness X ($\mu$m) | 15 | 15 | 15 | 15 | 15 | 15 |
|  | Y/X | 0.67 | 0.67 | 0.67 | 0.67 | 0.67 | 0.67 |
|  | Sa ($\mu$m) | 0.96 | 0.91 | 0.97 | 0.96 | 0.91 | 0.89 |
|  | Vmp ($\mu$m$^3$/$\mu$m$^2$) | 0.14 | 0.13 | 0.14 | 0.14 | 0.13 | 0.13 |
| Residual liquid amount (%) |  | 6.2 | 5.3 | 6.6 | 6.7 | 6.5 | 6.6 |
| Residual liquid evaluation |  | A | A | B | B | B | B |
| Appearance evaluation |  | A | A | B | B | B | B |

[Table 4]

|  |  | Ex. 19 | Ex. 20 | Ex.21 | Ex. 22 | Ex. 23 | Ex. 24 |
|---|---|---|---|---|---|---|---|
| Composition of first resin layer (parts by mass) | A1 | 50 | 50 | 50 | 50 | 50 | 50 |
|  | A2 | 50 | 50 | 50 | 50 | 50 | 50 |
|  | B2 (Y = 10) | 5 | 5 | 5 | 5 | 5 | 5 |
|  | C3 | 5 | 10 | 20 | - | - | - |
|  | C4 | - | - | - | 5 | 10 | 20 |
| Physical properties of first resin layer | Average particle diameter Y ($\mu$m) of filler | 10 | 10 | 10 | 10 | 10 | 10 |
|  | Thickness X ($\mu$m) | 15 | 15 | 15 | 15 | 15 | 15 |
|  | Y/X | 0.67 | 0.67 | 0.67 | 0.67 | 0.67 | 0.67 |
|  | Sa ($\mu$m) | 0.93 | 0.95 | 0.95 | 0.91 | 0.94 | 0.97 |
|  | Vmp ($\mu$m$^3$/$\mu$m$^2$) | 0.14 | 0.14 | 0.14 | 0.14 | 0.14 | 0.14 |
| Residual liquid amount (%) |  | 6.8 | 6.6 | 6.6 | 7.1 | 6.1 | 7.2 |
| Residual liquid evaluation |  | B | B | B | B | A | B |
| Appearance evaluation |  | B | B | B | C | A | C |

[Table 5]

|  |  | Ex. 25 | Ex. 26 | Ex. 27 | Ex. 28 | Ex. 29 | Ex. 30 |
|---|---|---|---|---|---|---|---|
| Composition of first resin layer (parts by mass) | A1 | 50 | 50 | 50 | 50 | 50 | 50 |
|  | A2 | 50 | 50 | 50 | 50 | 50 | 50 |
|  | B2 (Y= 10) | 5 | 5 | 5 | 5 | 5 | 5 |
|  | C5a | 5 | 10 | 20 | - | - | - |
|  | C6 | - | - | - | 5 | 10 | 20 |

(continued)

| | | Ex. 25 | Ex. 26 | Ex. 27 | Ex. 28 | Ex. 29 | Ex. 30 |
|---|---|---|---|---|---|---|---|
| Physical properties of first resin layer | Average particle diameter Y (μm) of filler | 10 | 10 | 10 | 10 | 10 | 10 |
| | Thickness X (μm) | 15 | 15 | 15 | 15 | 15 | 15 |
| | Y/X | 0.67 | 0.67 | 0.67 | 0.67 | 0.67 | 0.67 |
| | Sa (μm) | 0.95 | 0.96 | 0.91 | 0.89 | 0.97 | 0.95 |
| | Vmp (μm³/μm²) | 0.14 | 0.14 | 0.14 | 0.13 | 0.14 | 0.14 |
| | C5a — Melting point (°C) | 160 | 160 | 160 | - | - | - |
| | C5a — Softening point (°C) | 135 | 135 | 135 | - | - | - |
| Residual liquid amount (%) | | 6.0 | 6.6 | 6.9 | 6.8 | 6.5 | 7.0 |
| Residual liquid evaluation | | A | B | B | B | B | B |
| Appearance evaluation | | A | B | B | B | B | C |

[Table 6]

| | | Ex. 31 | Ex. 32 | Ex. 33 | Ex. 34 | Ex. 35 | Ex. 36 |
|---|---|---|---|---|---|---|---|
| Composition of first resin layer (parts by mass) | A1 | 50 | 50 | 50 | 50 | 50 | 50 |
| | A2 | 50 | 50 | 50 | 50 | 50 | 50 |
| | B2 (Y = 10) | 5 | 5 | 5 | 5 | 5 | 5 |
| | C5b | - | - | - | 5 | 10 | 20 |
| | C7 | 5 | 10 | 20 | - | - | - |
| Physical properties of first resin layer | Average particle diameter Y (μm) of filler | 10 | 10 | 10 | 10 | 10 | 10 |
| | Thickness X (μm) | 15 | 15 | 15 | 15 | 15 | 15 |
| | Y/X | 0.67 | 0.67 | 0.67 | 0.67 | 0.67 | 0.67 |
| | Sa (μm) | 0.89 | 0.92 | 0.96 | 0.92 | 0.95 | 0.93 |
| | Vmp (μm³/μm²) | 0.13 | 0.14 | 0.14 | 0.14 | 0.14 | 0.14 |
| | C5b — Melting point (°C) | - | - | - | 160 | 160 | 160 |
| | C5b — Softening point (°C) | - | - | - | 120 | 120 | 120 |
| Residual liquid amount (%) | | 5.8 | 6.6 | 7.0 | 5.7 | 5.2 | 6.1 |
| Residual liquid evaluation | | A | B | B | A | A | A |
| Appearance evaluation | | A | B | C | A | A | A |

[Table 7]

| | | Ex. 37 | Ex. 38 | Ex. 39 | Ex. 40 | Ex. 41 | Ex. 42 |
|---|---|---|---|---|---|---|---|
| Composition of first resin layer (parts by mass) | A1 | 50 | 50 | 50 | 50 | 50 | 50 |
| | A2 | 50 | 50 | 50 | 50 | 50 | 50 |
| | B2 (Y= 10) | 5 | 5 | 5 | 5 | 5 | 5 |
| | C5c | 5 | 10 | 20 | - | - | - |
| | C5d | - | - | - | 5 | 10 | 20 |
| Physical properties of first resin layer | Average particle diameter Y ($\mu$m) of filler | 10 | 10 | 10 | 10 | 10 | 10 |
| | Thickness X ($\mu$m) | 15 | 15 | 15 | 15 | 15 | 15 |
| | Y/X | 0.67 | 0.67 | 0.67 | 0.67 | 0.67 | 0.67 |
| | Sa ($\mu$m) | 0.91 | 0.96 | 0.92 | 0.92 | 0.90 | 0.95 |
| | Vmp ($\mu$m$^3$/$\mu$m$^2$) | 0.13 | 0.14 | 0.14 | 0.14 | 0.14 | 0.14 |
| | C5c or C5d — Melting point (°C) | 140 | 140 | 140 | 75 | 75 | 75 |
| | C5c or C5d — Softening point (°C) | 125 | 125 | 125 | 67 | 67 | 67 |
| Residual liquid amount (%) | | 5.8 | 5.3 | 5.9 | 5.8 | 6.0 | 6.4 |
| Residual liquid evaluation | | A | A | A | A | A | A |
| Appearance evaluation | | A | A | A | A | A | A |

[Table 8]

| | | Comp. Ex. 1 | Comp. Ex. 2 | Comp. Ex. 3 | Comp. Ex. 4 | Comp. Ex. 5 |
|---|---|---|---|---|---|---|
| Composition of first resin layer (parts by mass) | A1 | 50 | 50 | 50 | 50 | 50 |
| | A2 | 50 | 50 | 50 | 50 | 50 |
| | B4 (Y = 60) | - | 5 | - | - | - |
| | B5 (Y = 2) | - | - | 5 | - | - |
| | C4 | - | - | - | 10 | - |
| | C5 | - | - | - | - | 10 |
| Physical properties of first resin layer | Average particle diameter Y ($\mu$m) of filler | - | 60 | 2 | - | - |
| | Thickness X ($\mu$m) | 15 | 15 | 150 | 15 | 15 |
| | Y/X | - | 4.00 | 0.01 | - | - |
| | Sa ($\mu$m) | 0.22 | 4.75 | 4.75 | 0.20 | 0.23 |
| | Vmp ($\mu$m$^3$/$\mu$m$^2$) | 0.02 | 0.79 | 0.79 | 0.02 | 0.02 |
| Residual liquid amount (%) | | 12.6 | 11.5 | 12.1 | 10.4 | 10.1 |
| Residual liquid evaluation | | D | D | D | D | D |
| Appearance evaluation | | D | D | D | D | D |

**Industrial Applicability**

According to the present disclosure, there is provided a method for manufacturing a packaging body with superior slip-down property of an oil-in-water dispersion-type content. Furthermore, according to the present disclosure, there are provided a film for a packaging material, and a laminated film and a packaging material including the same.

Reference Signs List

1: first resin layer (innermost layer), 1a: resin composition, 1b: filler, 2: second resin layer, 3: adhesive layer, 5: substrate, 10, 20: packaging material (laminated film), C: content, $C_O$: oil content, F1: surface (first surface, innermost surface), F2: surface (second surface), $F_O$: oil film, P: packaging body.

**Claims**

1. A method for manufacturing a packaging body, the method comprising:

    (A) preparing a packaging material that includes an innermost layer containing a resin composition containing a polypropylene resin and a filler dispersed in the resin composition, a ratio Y/X of an average particle diameter Y $\mu$m of the filler to a thickness X $\mu$m of the innermost layer being 0.02 to 3.5;
    (B) producing a packaging body that has the packaging material and an oil-in-water dispersion-type content hermetically housed by the packaging material; and
    (C) subjecting the packaging body to a heating treatment so as to absorb oil contained in the content into the innermost layer.

2. The method for manufacturing a packaging body according to claim 1, wherein a lipid content percentage of the oil-in-water dispersion-type content is 0.1% by mass or more and less than 50% by mass.

3. A film for a packaging material, the film comprising a first resin layer that contains a resin composition containing a polypropylene resin and a filler dispersed in the resin composition, wherein
   a ratio Y/X of an average particle diameter Y $\mu$m of the filler to a thickness X $\mu$m of the first resin layer is 0.02 to 3.5.

4. The film for a packaging material according to claim 3, wherein an arithmetic mean roughness Sa of a surface that is a first surface of the first resin layer and constitutes an innermost surface of the film for a packaging material is 0.3 $\mu$m or more and less than 1.0 $\mu$m.

5. The film for a packaging material according to claim 3 or 4, wherein a reduced peak volume Vmp of a surface that is a first surface of the first resin layer and constitutes an innermost surface of the film for a packaging material is 0.08 to 0.3 $\mu$m$^3$/$\mu$m$^2$.

6. The film for a packaging material according to any one of claims 3 to 5, further comprising a second resin layer provided on a second surface of the first resin layer.

7. The film for a packaging material according to any one of claims 3 to 6, wherein the first resin layer further contains at least one additive selected from the group consisting of the following resin materials (i) to (vii):

    (i) a block copolymer of polypropylene and polyethylene;
    (ii) a block copolymer of polyethylene and ethylene-butylene;
    (iii) a block copolymer of polyethylene and ethylene-octene;
    (iv) an ethylene-based elastomer;
    (v) a propylene-based elastomer;
    (vi) a butene-based elastomer; and
    (vii) a reactor TPO.

8. The film for a packaging material according to claim 7, wherein the first resin layer contains the (v) propylene-based elastomer.

9. The film for a packaging material according to claim 7 or 8, wherein at least one of a softening point and a melting point of the additive is 130°C or lower.

10. A laminated film comprising:

a substrate; and
the film for a packaging material according to any one of claims 3 to 9 provided on the substrate, wherein the first resin layer is disposed on at least one outermost surface.

11. A packaging material comprising the laminated film according to claim 10.

12. The packaging material according to claim 11, wherein the packaging material is used in a packaging body in which an oil-in-water dispersion-type content is hermetically housed and which is subjected to a thermal treatment.

13. The packaging material according to claim 12, wherein a lipid content percentage of the oil-in-water dispersion-type content is 0.1% by mass or more and less than 50% by mass.

# Fig.1

# *Fig.2*

(a)

(b)

(c)

Fig.3

# Fig.4

# Fig.5

EP 4 046 934 A1

(a)   (b)   (c)   (d)   (e)

POURING

30

30a

30b   P

CUTTING

P

C

50   C

60

<table>
<tr><td colspan="2"><b>INTERNATIONAL SEARCH REPORT</b></td><td>International application No.<br>PCT/JP2020/042676</td></tr>
</table>

**A. CLASSIFICATION OF SUBJECT MATTER**
B65D 65/40(2006.01)i; B65D 81/26(2006.01)i
FI: B65D81/26 H; B65D65/40 D

According to International Patent Classification (IPC) or to both national classification and IPC

**B. FIELDS SEARCHED**

Minimum documentation searched (classification system followed by classification symbols)
B65D65/40; B65D81/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-331578 A (OKURA INDUSTRIAL CO., LTD.) 19 November 2002 (2002-11-19) paragraphs [0001]-[0029] | 1-2, 7-13 |
| X<br>Y | JP 2019-014521 A (TOPPAN PRINTING CO., LTD.) 31 January 2019 (2019-01-31) paragraphs [0001]-[0003], [0012]-[0061], fig. 1-2 | 3-6<br>1-2, 7-13 |
| Y | JP 04-121174 A (HOUSE FOOD INDUSTRIAL COMPANY LIMITED) 22 April 1992 (1992-04-22) page 2, lower right column, lines 17-20 | 2, 13 |
| Y | JP 2012-505771 A (DOW GLOBAL TECHNOLOGIES LLC) 08 March 2012 (2012-03-08) paragraph [0037] | 9-13 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 December 2020 (24.12.2020) | Date of mailing of the international search report<br>12 January 2021 (12.01.2021) |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

INTERNATIONAL SEARCH REPORT

Information on patent family members

International application No.

PCT/JP2020/042676

| Patent Documents referred in the Report | Publication Date | Patent Family | Publication Date |
|---|---|---|---|
| JP 2002-331578 A | 19 Nov. 2002 | (Family: none) | |
| JP 2019-014521 A | 31 Jan. 2019 | (Family: none) | |
| JP 04-121174 A | 22 Apr. 1992 | (Family: none) | |
| JP 2012-505771 A | 08 Mar. 2012 | US 2011/0268966 A1 paragraph [0037] WO 2010/043084 A1 KR 10-2011-0081850 A KR 10-2011-0091676 A CN 102256787 A | |

Form PCT/ISA/210 (patent family annex) (January 2015)

**EP 4 046 934 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019018878 A
- WO 2018003978 A